Europäisches Patentamt

European Patent Office

Office européen des brevets

(11) Numéro de publication : **0 040 129**
**B1**

(12) **FASCICULE DE BREVET EUROPÉEN**

(45) Date de publication du fascicule du brevet :
**07.12.83**

(21) Numéro de dépôt : **81400674.8**

(22) Date de dépôt : **29.04.81**

(51) Int. Cl.³ : **E 02 B 15/04**

(54) **Récupérateur de pétrole à grand débit pour la dépollution sur eaux agitées.**

(30) Priorité : **08.05.80 FR 8010234**

(43) Date de publication de la demande :
**18.11.81 Bulletin 81/46**

(45) Mention de la délivrance du brevet :
**07.12.83 Bulletin 83/49**

(84) Etats contractants désignés :
**DE GB NL SE**

(56) Documents cités :
**FR-A- 2 109 257**
**FR-A- 2 253 378**
**FR-A- 2 431 880**
**US-A- 3 656 619**

(73) Titulaire : **Grihangne, André Emile**
**186, Avenue Victor Hugo**
**F-75116 Paris (FR)**

(72) Inventeur : **Grihangne, André Emile**
**186, Avenue Victor Hugo**
**F-75116 Paris (FR)**

(74) Mandataire : **Moulines, Pierre et al**
**Cabinet BEAU de LOMENIE 55, rue d'Amsterdam**
**F-75008 Paris (FR)**

Récupérateur de pétrole à grand débit pour la dépollution sur eaux agitées

La présente invention est relative à un récupérateur de pétrole à grand débit, à vortex forcé, pour la dépollution des eaux agitées, associé à une plate-forme flottante fluviale ou marine.

Par exemple, la plate-forme flottante peut être un navire dépollueur auquel est intégré le récupérateur à vortex forcé dont l'agencement peut permettre simultanément la séparation eau-hydrocarbure, la récupération du produit polluant et la propulsion du navire sur la zone de prélèvement ainsi que sa manœuvre.

L'installation flottante peut être aussi une structure statique disposée à la base d'un barrage disposé en épi de façon à intercepter et à guider le courant fluvial ou marin porteur de la nappe polluante, ou bien une structure placée dans la pointe du V formé par un barrage marin remorqué.

Toute une série de procédés ont été envisagés et même pour certains appliqués, dans le but « d'écrémer » la surface de l'eau et de récupérer mécaniquement les hydrocarbures déversés accidentellement.

Ces récupérateurs mécaniques de différents types — à déversoirs, à disques, à bandes, à barrières et récupérateurs intégrés, à vortex statique ou dynamique — sont utilisables sur l'eau calme, mais leur efficacité en tant que séparateurs eau/polluant et leur capacité de débit de récupération se dégradent très vite avec l'état de la mer. A la lumière des « marées noires » les plus récentes, il s'avère qu'aucun des matériels connus n'offre une réponse satisfaisante en cas de déversements catastrophiques d'hydrocarbures dans les fleuves, les ports ou à la mer.

On connaît notamment parmi ces récupérateurs mécaniques existants un dispositif ayant fait l'objet du brevet FR-A-2.109.257.

Dans ce brevet, on utilise la mise en giration d'une veine liquide par la vitesse de translation, en surface, d'une ou plusieurs chambres cycloniques à axe vertical.

Cet ensemble constitue un récupérateur mécanique passif, les chambres cycloniques constituant des enceintes statiques au sein desquelles la séparation eau-polluant s'effectue par la centrifugation qui résulte de l'organisation imposée par la vitesse de translation aux lignes de courant de la veine liquide.

Toutefois, ce dispositif dont le débit est fonction de la vitesse de translation de la plate-forme qui le supporte, ne peut être significatif que par mer calme, étant donné le mode utilisé pour le prélèvement de la nappe et ne permet pas la récupération de nappes polluantes sur une mer agitée.

En mer, l'emploi des barrages qu'impliquent les équipements actuels est aléatoire, car en cas de mauvais temps, on peut se trouver dans l'impossibilité de les rentrer ; les efforts auxquels ils seront soumis, même si on a pu rompre l'attelage et les garder simplement en remorque, risquent de les détériorer. D'un autre côté, si l'on rompt le dispositif à la moindre annonce de mauvais temps, la durée effective de la récupération sera souvent dérisoire.

On s'est orienté vers l'emploi de récupérateurs dynamiques conçus pour être utilisés sans l'aide de barrages et portés par des navires de haute mer ayant une importante capacité de stockage. Mais l'ensemble navire/récupérateur souffre de fragilité au niveau des dispositifs de fixation à la coque ; de plus les effets de tangage et de roulis joints à ceux de la houle font que l'efficacité des récupérateurs peut être notablement diminuée. En pratique, toute intervention est peu efficace, voire dangereuse pour le matériel actuel au-dessus de 2 mètres de creux.

Dans ces conditions, d'aucuns proposent l'étude de navires dépollueurs de gros ou de très gros tonnage à récupérateur et système de traitement intégré. Cette tendance est fondée, en dernière analyse, sur l'inventaire actuellement exploré des phénomènes physiques utilisés pour assurer efficacement en mer agitée la séparation eau/pétrole. A ce jour, les navires dépollueurs de grande capacité qui seraient étudiés pour mettre en œuvre ces procédés connus nécessiteraient des budgets de développement et d'emploi extrêmement importants et dont la rentabilité, en dehors des interventions, serait nulle.

On se trouve finalement devant un mur technologique dont la percée par les moyens actuellement envisagés demanderait un temps et des investissements qu'une commission interministérielle d'un pays pourtant sévèrement sinistré par deux catastrophes pétrolières récentes a jugés « prohibitifs au niveau national ».

De façon générale, la présente invention apporte à ces problèmes majeurs des solutions techniques originales, étayées par des travaux expérimentaux de recherche que le demandeur a conduits avec le concours de l'Institut de Mécanique des Fluides de Lille (I.M.F.L.).

Ces solutions ont été retenues comme étant les plus satisfaisantes, pour franchir le « mur technologique » actuellement identifié par les experts, du point de vue de l'efficacité et de l'économie des moyens — aussi bien à la construction qu'à l'utilisation — des performances, de la sécurité et de la polyvalence possible d'emploi du navire porteur. Il doit être bien entendu que si l'invention protège préférentiellement la combinaison et l'intégration des différents moyens qu'elle propose, elle ne doit pas être limitée à cette combinaison, mais s'étend également aux moyens nouveaux et spécifiques qu'elle préconise et qui constituent par leur conjugaison une unité fonctionnelle.

L'objet principal de l'invention est de réaliser un nouveau récupérateur marin d'hydrocarbures polluants à grand débit ;

— permettant l'écrémage rapide d'un espace fluvial ou marin, la mer fut-elle agitée,

— pouvant équiper une installation de dépollution fixe ou mobile, quelle que soit la dimension de celle-ci,

— susceptible d'être fonctionnellement intégrée aux œuvres vives d'un navire et de fournir comme sous-produit la poussée nécessaire à sa propulsion et à ses évolutions en manœuvre sur zones d'intervention de dépollution,

— permettant la conception de navires dépollueurs dans une large gamme de tonnage et capables de missions diverses (lutte contre l'incendie, sauvetage...) à l'échelle des besoins : dépollution de sites portuaires, d'estuaires et en haute mer.

L'invention se rapporte plus particulièrement, bien que non exclusivement, à un récupérateur constitué par une nouvelle turbomachine d'axe plus préférentiellement horizontal, dont la veine liquide traversant un rotor normalement à son axe de rotation est guidée par un stator complètement immergé et aménagé dans la structure flottante qui le supporte, que celle-ci soit une plate-forme fixe ou un navire.

Conformément à l'invention, on utilise un récupérateur de pétrole à grand débit sur eaux agitées comportant au moins un stator dans lequel tourne un rotor muni d'aubages qui aspire l'eau polluée perpendiculairement à son axe de rotation, caractérisé en ce que l'ensemble stator-rotor (1, 4a, 4b, 5) est complètement immergé, et en ce que la configuration du stator (4a, 4b, 5) engendre et entretient par interaction entre stator et rotor au sein de la veine liquide mise en mouvement un tourbillon cylindrique (10) forcé stabilisé en azimut sur la périphérie du rotor (1) non associé à l'écoulement général de la veine refoulée, l'axe dudit tourbillon (10) étant parallèle à l'axe du rotor (1) et son intensité étant fonction de la vitesse de rotation du rotor, et en ce que la nappe de pétrole portée par l'eau est acheminée en immersion jusqu'au dit tourbillon (10) par le courant créé par l'aspiration le long d'une paroi prolongeant le stator et interceptant la surface de l'eau, et en ce que le pétrole moins dense que l'eau est happé dans ledit tourbillon (10) d'où il est aspiré, au fur et à mesure de sa localisation par des moyens de pompage qui le refoulent vers une capacité de stockage.

Selon une caractéristique facultative de l'invention, le rotor est constitué par un barillet cylindrique d'aubes dont la concavité est orientée dans le sens de la rotation. L'écoulement de la veine est caractérisé par la formation d'un noyau tourbillonnaire ou vortex forcé non associé à l'écoulement dont l'intensité est fonction de la vitesse périphérique des aubes et dont l'emplacement se situe au voisinage de la crosse de part et d'autre de la grille d'aube. A la périphérie du vortex, les lignes de courant sortant du rotor forment avec celles qui retournent à l'intérieur de celui-ci un diffuseur liquide variable avec le débit et le long duquel s'effectue un changement de pression sans pertes par frottement, comme ce serait le cas au voisinage d'un diffuseur à paroi rigide. L'expérimentation d'une telle turbomachine montre que les vitesses moyennes associées aux lignes de courant de sortie sont beaucoup plus élevées que la vitesse périphérique des aubes, ce qui explique les débits très importants pour une section de sortie déterminée.

Selon une autre caractéristique de l'invention avantageusement reliée aux précédentes, le vannage de la section de sortie modifie quelque peu l'emplacement du vortex et augmente ses dimensions.

Selon une autre caractéristique facultative de l'invention reliée aux précédentes, le vortex forcé créé par l'interaction hydrodynamique entre le rotor et le stator est le siège d'une accélération centrifuge intense qui peut atteindre un ordre de grandeur décuple de celui de la pesanteur ($k \times 10\,g$). Lorsque la veine liquide d'entrée est composée d'eau et de pétrole, ce dernier moins dense que l'eau se concentre immédiatement dans le vortex, ladite accélération centrifuge assurant in situ la séparation entre l'eau et le pétrole.

Selon une autre caractéristique facultative de l'invention, la paroi amont de la crosse du stator, présente une forme convexe qui assure le guidage en immersion de la nappe polluante aspirée par le rotor jusqu'au voisinage de l'entrefer de la crosse et du rotor où elle est happée par le vortex. La partie supérieure de la veine aspirée par le rotor et qui recèle la plus grande partie du polluant est confinée latéralement par deux joues qui convergent vers le rotor de façon à embrasser le flux maximal et à provoquer l'accroissement de l'épaisseur de la couche polluante par resserrement de la section de passage qui lui est offerte.

Selon une autre caractéristique facultative de l'invention, le pétrole est aspiré au fur et à mesure de sa localisation dans le vortex à travers une prise pariétale aménagée dans le bec concave de la crosse, laquelle assure ainsi la séparation entre la veine d'entrée polluée et la veine de sortie de l'eau épurée.

Grâce à la possibilité de faire varier indépendamment le régime du rotor, et par conséquent l'intensité de l'accélération centrifuge dans le vortex d'une part, et, d'autre part, le vannage de la section de sortie, et par conséquent l'emplacement et les dimensions du vortex, par des moyens connus, cet agencement du récupérateur selon l'invention apporte une solution simple et avantageuse à un problème non encore résolu : celui de l'adaptation optimale du récupérateur aux caractéristiques physiques du polluant, à l'épaisseur de la nappe et à la vitesse d'avancement sur la surface de l'eau dans le cas d'un navire dépollueur.

Enfin, selon une dernière caractéristique facultative de l'invention, l'énergie communiquée à la veine aspirée par le récupérateur peut être utilisée pour assurer au cours des opérations de dépollution la propulsion et la manœuvre du navire ainsi équipé.

Les caractéristiques et avantages de l'invention seront mieux compris à la lecture de la description qui va suivre d'un exemple de réalisation de l'intégration d'un propulseur/récupérateur de pétrole à un navire dépollueur, et en se référant aux dessins annexés et non limitatifs, dans lesquels :

la figure 1 illustre l'organisation de l'écoulement d'un liquide aspiré par le récupérateur selon l'invention,

la figure 2 est une vue en coupe selon la ligne III de l'ensemble rotor/stator de la figure 1,

la figure 3 représente la récupération du pétrole dans la veine polluée aspirée par le récupérateur selon l'invention,

la figure 4 est une vue en élévation coupée selon la ligne IV de la figure 5 et représente un exemple de la réalisation de l'intégration d'un récupérateur de pétrole sur un navire dépollueur dont il assure également la propulsion,

la figure 5 est une demi-vue de dessous de la figure 4, l'autre demi-vue non représentée étant symétrique,

les figures 6, 6a, 6b sont des vues de dessous des tuyères propulsives de sortie du récupérateur de pétrole selon l'invention utilisé comme propulseur principal ou d'appoint.

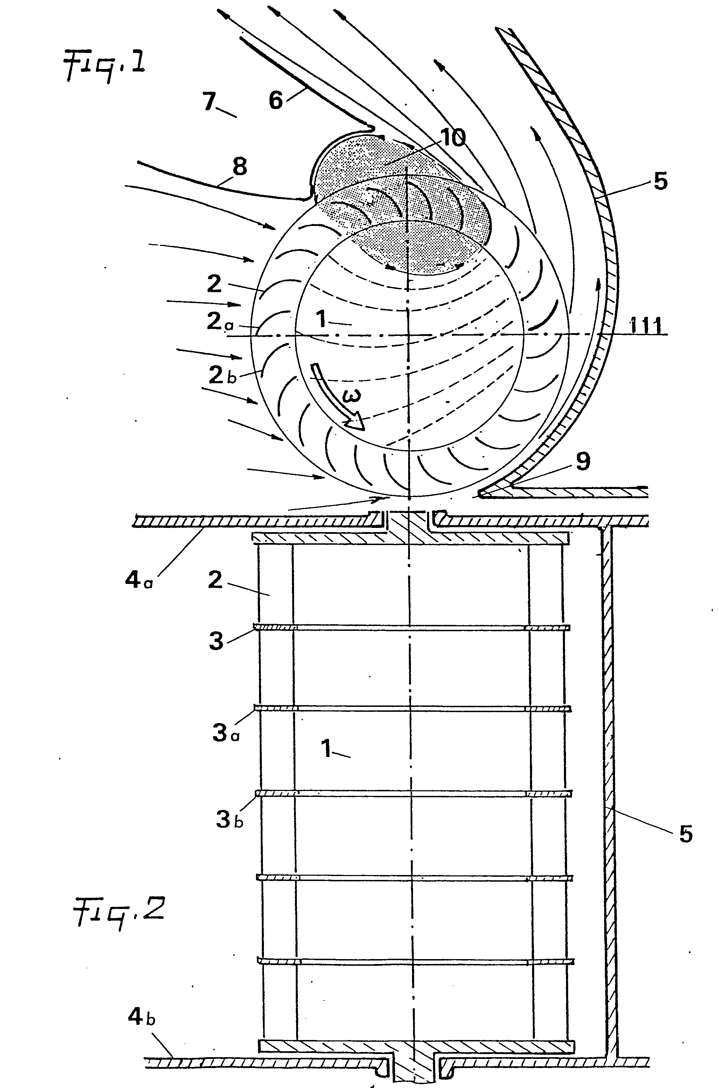

Sur les figures 1 et 2, on a représenté schématiquement l'écoulement dont les caractéristiques sont exploitées par l'invention, dans lesquelles un rotor 1 muni d'aubes 2, 2a, 2b... dont la concavité est dans le sens de la rotation W et qui sont maintenues en barillet cylindrique par des couronnes 3, 3a, 3b... est supporté par les flasques 4a, 4b d'un stator dont la volute de refoulement 5 et la paroi amont 6 de la crosse 7 canalisent la veine de sortie. La veine d'entrée est délimitée à sa partie supérieure par la paroi aval 8 de la crosse et à sa partie inférieure par la bordure amont 9 de la volute. Un vortex forcé 10 s'installe de part et d'autre de la grille d'aubes du rotor, au contact du bec concave de la crosse 7. Ce vortex n'est pas associé à l'écoulement et son sens de rotation indiqué par les flèches placées sur la ligne de courant frontière est le même que celui du rotor.

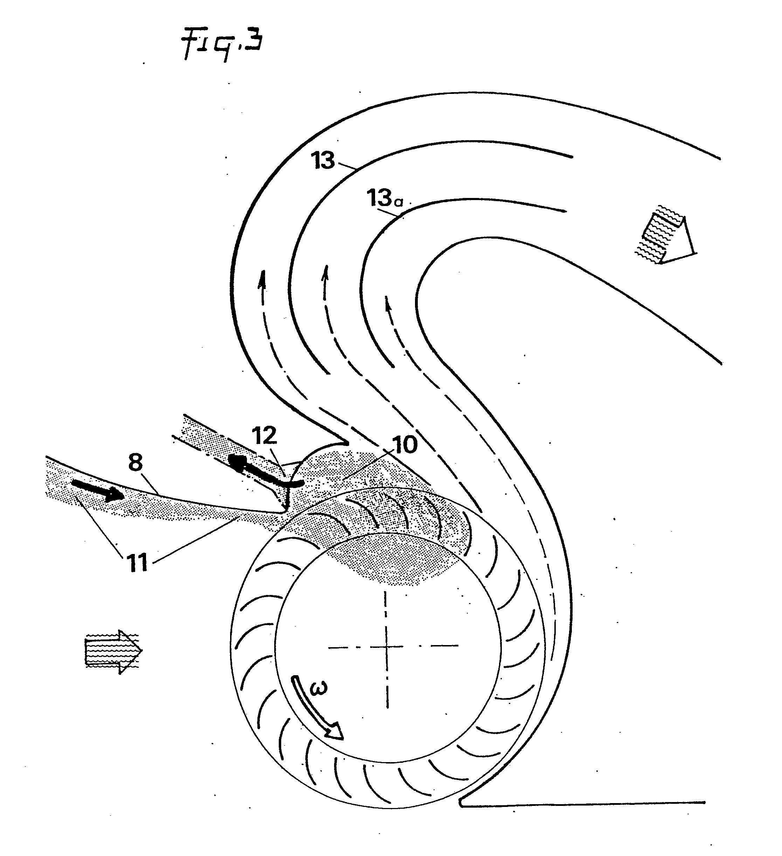

Sur la figure 3, on a représenté le processus de concentration et de prélèvement du pétrole dont est chargée la partie supérieure de la veine aspirée. La configuration de la paroi aval 8 de la crosse permet d'acheminer la nappe composite de pétrole et d'eau 11 à proximité de l'entrefer crosse/rotor. Le pétrole moins dense se concentre dans le vortex 10 sous l'effet du champ des forces centrifuges et est aspiré au fur et à mesure à travers la prise pariétale 12 puis refoulé par des moyens connus vers le stockage prévu à cet effet.

La forme du conduit de refoulement d'eau épurée impose le retournement vers l'arrière de la veine de sortie où elle sera éjectée, avec une quantité de mouvement importante dans le but d'assurer la propulsion de la coque supportant le récupérateur selon l'invention. Une grille d'aubes 13, 13a, assure la courbure de la veine en réduisant la perte de charge imposée de ce fait.

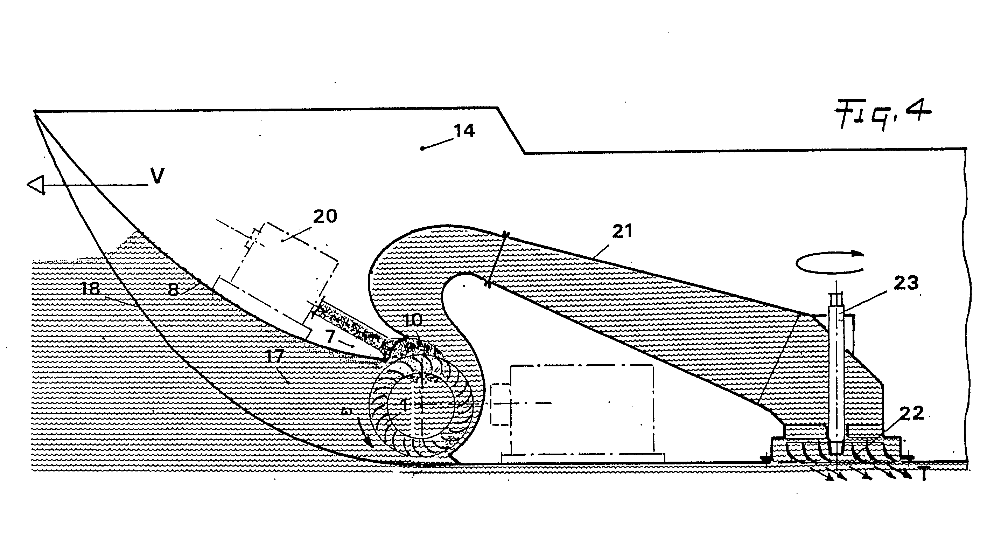

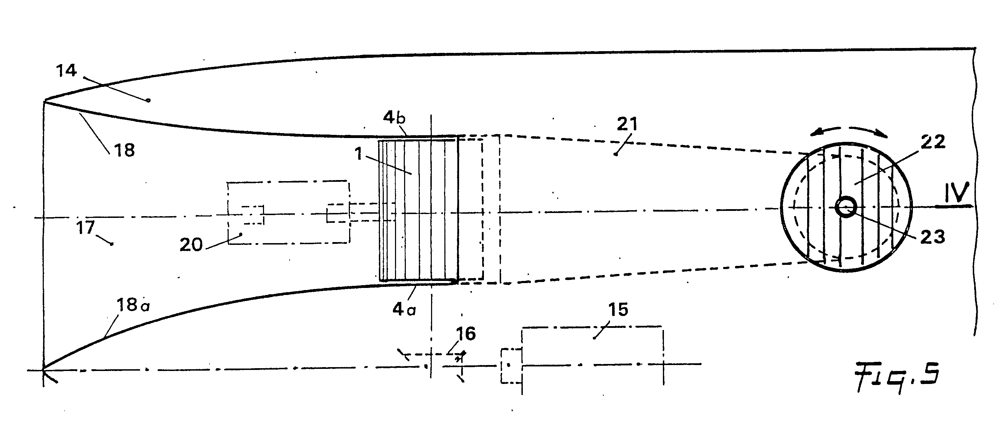

Sur les figures 4 et 5, on a représenté un exemple d'intégration du récupérateur de pétrole selon l'invention sur un navire dépollueur 14 dont il assure la propulsion et dans lequel deux rotors 1 et 1s (s pour symétrique, non représenté) sont entraînés simultanément à la vitesse réglable W par au moins un moteur 15 et une transmission de puissance 16. Dans la proue du navire 14 sont ménagés deux canaux 17 et 17s, chacun d'eux étant bordé latéralement par les joues convergentes 18 et 18a se raccordant aux flasques 4a et 4b de chacun des stators. La partie supérieure de ces canaux est constituée par les parois 8 et 8s qui matérialisent les parois aval des crosses 7 et 7s. La séparation eau/pétrole s'effectue comme il a été exposé plus haut. Le pétrole est aspiré par les pompes 20 et 20s au fur et à mesure de sa localisation dans les vortex 10 et 10s.

L'eau épurée est refoulée dans les conduits diffuseurs 21 et 21s, puis est éjectée à travers les grilles d'aubes orientables 22 et 22s dont la commande en azimut est assurée par les arbres 23 et 23s contrôlés à partir de la timonerie par des moyens connus.

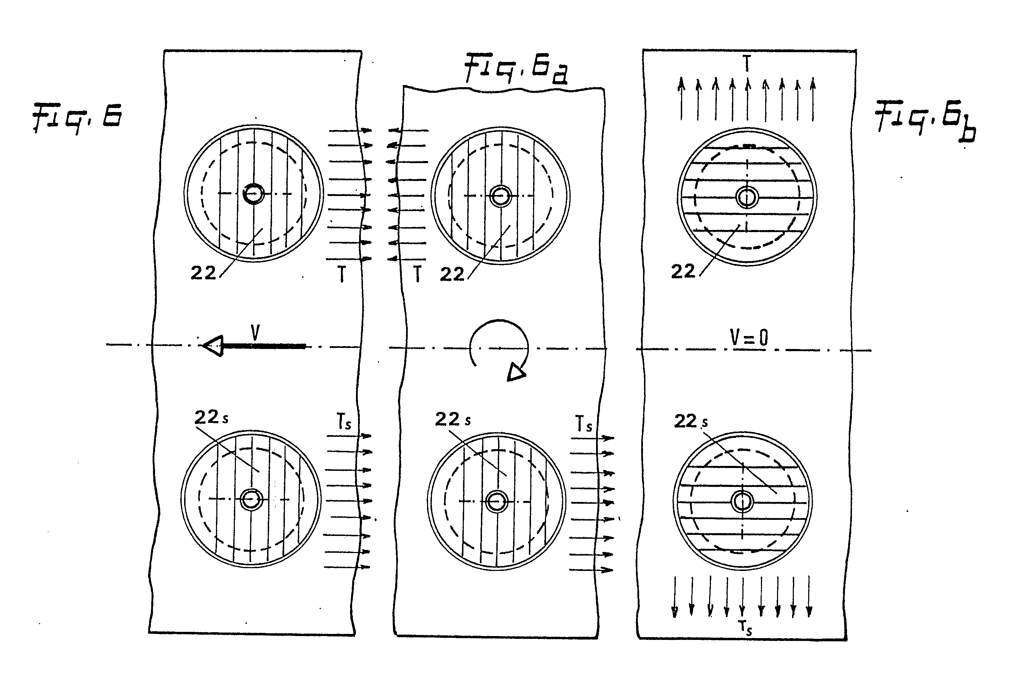

Sur les figures 6, 6a et 6b, on a représenté trois combinaisons des poussées T et Ts de chacun des deux jets qui offrent un intérêt évident pour assurer la manœuvrabilité du navire 14, notamment au cours d'opérations de dépollution.

Sur la figure 6, les deux poussées T et Ts sont parallèles, de même sens et propulsent le navire à la vitesse V.

Sur la figure 6a, les deux poussées T et Ts forment un couple permettant l'évitage du navire.

Sur la figure 6b, les deux poussées T et Ts donnent une résultante nulle et permettent au récupérateur de fonctionner en maintenant le navire à vitesse nulle.

L'installation décrite ci-dessus n'est qu'un exemple de réalisation de l'invention. Le récupérateur marin de pétrole selon l'invention peut être installé de diverses façons, selon que son emploi est limité au prélèvement du pétrole polluant à partir d'une installation fixe ou bien selon que l'énergie dépensée pour actionner sa partie tournante peut être mise à profit pour assurer la propulsion et la manœuvre d'un navire destiné à « moissonner » une nappe polluante.

Le récupérateur marin de pétrole de grand débit à vortex forcé s'applique particulièrement à la réalisation d'unités navigantes de tonnage croissant selon que leur emploi est prévu en site portuaire, en estuaire ou en haute mer.

**Revendications**

1. Récupérateur de pétrole à grand débit sur eaux agitées comportant au moins un stator (4a, 4b, 5) dans lequel tourne un rotor (1) muni d'aubages qui aspire l'eau polluée perpendiculairement à son axe de rotation, caractérisé en ce que l'ensemble stator-rotor (1, 4a, 4b, 5) est complètement immergé, et en ce que la configuration du stator (4a, 4b, 5) engendre et entretient par interaction entre stator et rotor au sein de la veine liquide mise en mouvement un tourbillon cylindrique (10) forcé stabilisé en azimut sur la périphérie du rotor (1) non associé à l'écoulement général de la veine refoulée, l'axe dudit tourbillon (10) étant parallèle à l'axe du rotor (1) et son intensité étant fonction de la vitesse de rotation du rotor ; et en ce que la nappe de pétrole portée par l'eau est acheminée en immersion jusqu'au dit tourbillon (10) par le courant créé par l'aspiration le long d'une paroi (8) prolongeant le stator et interceptant la surface de l'eau, et en ce que le pétrole moins dense que l'eau est happé dans ledit tourbillon (10) d'où il est aspiré, au fur et à mesure de sa localisation par des moyens de pompage (20) qui le refoulent vers une capacité de stockage.

2. Récupérateur de pétrole selon la revendication 1, caractérisé en ce que l'axe du rotor (1) est sensiblement horizontal, ledit rotor étant constitué d'une grille d'aubes (2, 2a, 2b) identique disposées en barillet à sa périphérie et parallèlement à son axe de rotation, et en ce que la paroi supérieure (8) du stator présente au voisinage de la périphérie du rotor une arête de rebroussement parallèle aux aubages du rotor (1) et ménageant avec ceux-ci un faible entrefer, ladite arête assurant la séparation entre l'aspiration et le refoulement de la veine liquide ; en ce que le profil de ladite paroi (8) en aval de ladite arête est sensiblement affine de la ligne de courant délimitant le tourbillon forcé, ledit profil formant une crosse (7) qui localise ledit tourbillon.

3. Récupérateur de pétrole selon la revendication 2, caractérisé en ce que les moyens de pompage du pétrole localisé dans le tourbillon sont constitués par une prise pariétale (12) ménagée dans la crosse (7) du stator en communication avec l'aspiration d'une pompe (20, 20a) dont le débit est réglable en fonction de la saturation du tourbillon par le pétrole.

4. Récupérateur de pétrole selon l'une des revendications 1 ou 2, caractérisé en ce que le stator (4, 4a, 5) est intégré à l'avant des œuvres vives d'une plate-forme flottante ou d'un navire (14), le prolongement de la paroi supérieure (8) dudit stator constituant l'avant de la coque et interceptant la surface de l'eau, et en ce que l'eau à la sortie du ou des rotors est refoulée par le ou lesdits rotors (1) vers l'arrière de la plate-forme ou du navire (14) pour assurer sa propulsion par réaction de jet.

5. Récupérateur de pétrole selon l'une des revendications 1 ou 2, caractérisé en ce que le stator est intégré à l'avant des œuvres vives d'un navire (14) et en ce que l'eau refoulée par le rotor (1) dans un conduit (21) vers l'arrière du navire est éjectée au travers d'une grille d'aubes orientable (22, 22s) disposée sous la coque du navire et assurant l'orientation du jet pour propulser le navire.

6. Récupérateur de pétrole selon la revendication 5, caractérisé en ce qu'il refoule l'eau dans au moins deux grilles d'aubes orientables (22, 22s) sur 360° dont la commande en azimut permet de composer les poussées des jets et confère au navire une grande manœuvrabilité.

## Claims

1. High capacity oil recuperator for use in rough waters, comprising at least a stator (4a, 4b, 5) inside which rotates a rotor (1) provided with vanes, which rotor sucks in the polluted water perpendiculary to its axis of rotation, characterized in that the stator-rotor assembly (1, 4a, 4b, 5) is entirely submerged and in that the configuration of the stator (4a, 4b, 5) generates and keeps up, by interaction between stator and rotor in the center of the activated liquid stream, an induced cylindrical vortex (10) stabilized in all directions on the periphery of the rotor (1) and non-associated to the general flow of the delivered stream, the axis of the said vortex being parallel to the axis of the rotor (1) and its intensity being dependent on the speed of rotation of the rotor ; and in that the oil slick on the water surface is guided submerged as far as the vortex (10) by the current created by the suction along a wall (8) extending from the stator and intercepting the water surface, and in that the oil, which is less dense than the water, is caught into the said vortex (10) wherefrom it is sucked up as it is localized, via pumping means (20) which deliver it towards a storage means.

2. Oil recuperator according to claim 1, characterized in that the axis of the rotor (1) is substantially horizontal, the said rotor being constituted by a grid of identical vanes (2, 2a, 2b) arranged in cylindrical form at its periphery and in parallel to its axis of rotation, and in that the upper wall (8) of the stator is provided close to the periphery of the rotor with a turning line parallel to the vanes of the rotor (1) and creating with the latter a small air gap, the said lines ensuring the separation between the suction and the delivery of the liquid stream ; in that the profile of the said wall (8) downstream of the said turning line is substantially akin to the line of flow defining the induced vortex, the said profile forming a crook (7) which localizes the said vortex.

3. Oil recuperator according to claim 2, characterized in that the means for pumping the oil located in the vortex are constituted by a parietal intake (12) provided in the crook (7) of the stator and which communicates with the induction pipe of a pump (20, 20a) the capacity of which is adjustable in relation to the oil saturation of the vortex.

4. Oil recuperator according to any one of claims 1 or 2, characterized in that the stator (4, 4a, 5) is incorporated at the front of the quick works of a floating platform or of a ship (14), the extending part of the upper wall (8) of the said stator constituting the fore part of the hull and intercepting the surface of the water, and in that the water emerging from the rotor or rotors is delivered by the said rotor or rotors (1) towards the rear end of the platform of the ship (14) in order to propel same by jet reaction.

5. Oil recuperator according to any one of claims 1 or 2, characterized in that the stator is incorporated at the front of the quick works of a ship (14) and in that the water, delivered by the rotor (1) through a conduit (21) towards the bows of the ship, is ejected through a grid of directionally adjustable vanes (22, 22s) situated under the ship's hull and directing the jet to propel the ship.

6. Oil recuperator according to claim 5, characterized in that said recuperator delivers the water through at least two grids of directionally adjustable vanes (22, 22s) over 360° the control of which in all directions enables to compose the jet pressures and makes the ship very manoeuvrable.

## Ansprüche

1. Auf bewegtem Wasser arbeitende Ölrückgewinnungseinrichtung hoher Leistung mit wenigstens einem Stator (4a, 4b, 5), in dem sich ein mit Schaufelkränzen versehener Rotor (1) dreht, der das verunreinigte Wasser senkrecht zu seiner Drehachse ansaugt, dadurch gekennzeichnet, daß die Anordnung Stator-Rotor (1, 4a, 4b, 5) vollständig untergetaucht ist, daß die Form des Stators (4a, 4b, 5) durch Wechselwirkung zwischen dem Stator und dem Rotor inmitten des in Bewegung gesetzten Flüssigkeitsstrangs einen kräftigen zylindrischen Wirbel (10) erzeugt und aufrechterhält, der im Azimut am Umfang des Rotors (1) stabilisiert ist und nicht zur allgemeinen Strömung des geförderten Strangs gehört, wobei die Achse des Wirbels (10) parallel zur Achse des Rotors (1) ist und seine Intensität von der Drehzahl des Rotors abhängt, daß die vom Wasser getragene Ölschicht untergetaucht bis zum Wirbel (10) durch den Strom gefördert wird, der durch das Ansaugen längs einer Wand (8) erzeugt wird, die den Stator verlängert und die Oberfläche des Wassers unterbricht, und daß das Öl, das eine geringere Dichte als Wasser hat, im Wirbel (10) aufgenommen wird, von wo aus es entsprechend seinem Ort durch eine Pumpeinrichtung (20) angesaugt wird, die es zu einem Vorratsraum fördert.

2. Ölrückgewinnungseinrichtung nach Anspruch 1, dadurch gekennzeichnet, daß die Achse des Rotors (1) im wesentlichen waagerecht ist, wobei der Rotor aus einem Gitter (2, 2a, 2b) aus identischen Schaufeln besteht, die an seinem Umfang trommelförmig und parallel zu seiner Drehachse angeordnet sind, daß die obere Wand (8) des Stators in Nähe des Umfangs des Rotors eine Umkehrkante aufweist, die zu den Schaufelkränzen des Rotors (1) parallel ist und mit ihm einen kleinen Spalt bildet, wobei diese Kante die Trennung zwischen der Ansaugung und der Förderung des flüssigen Strangs bewirkt, und daß das Profil der Wand (8) stromab der Kante affin mit der den kräftigen Wirbel begrenzenden Stromlinie ist, wobei das Profil ein den Wirbel lokalisierendes Querstück (7) bildet.

3. Ölrückgewinnungseinrichtung nach Anspruch 2, dadurch gekennzeichnet, daß die Pumpeinrichtung für das im Wirbel befindliche Öl aus einer an der Wand angeordneten Entnahme (12) besteht, die im Querstück (7) des Stators angeordnet ist und mit dem Einlaß einer Pumpe (20, 20a) in Verbindung steht, deren Fördermenge in Abhängigkeit von der Sättigung des Wirbels mit Öl regelbar ist.

4. Ölrückgewinnungseinrichtung nach einem der Ansprüche 1 oder 2, dadurch gekennzeichnet, daß der Stator (4, 4a, 5) in den bugseitigen Unterwasserteil einer schwimmenden Plattform oder eines Schiffs (14) integriert ist, wobei die Verlängerung der oberen Wand (8) des Stators den Bug des Schiffskörpers bildet und die Oberfläche des Wassers unterbricht, und daß das Wasser am Austritt des Rotors oder der Rotoren vom Rotor oder von den Rotoren (1) zur Rückseite der Plattform oder des Schiffs (14) gefördert wird, um dessen Vortrieb durch Strahlreaktion zu erzielen.

5. Ölrückgewinnungseinrichtung nach einem der Ansprüche 1 oder 2, dadurch gekennzeichnet, daß der Stator in den bugseitigen Unterwasserteil eines Schiffs (14) integriert ist, und daß das vom Rotor (1) in eine Leitung (21) zur Rückseite des Schiffs geförderte Wasser durch ein Gitter aus ausrichtbaren Schaufeln (22, 22s) ausgestoßen wird, das unter dem Schiffskörper angeordnet ist und die Ausrichtung des Strahls für den Vortrieb des Schiffs bewirkt.

6. Ölrückgewinnungseinrichtung nach Anspruch 5, dadurch gekennzeichnet, daß sie das Wasser in wenigstens zwei Gitternaus auf 360° ausrichtbaren Schaufeln (22, 22s) fördert, deren Steuerung im Azimut ein Zusammensetzen der Schübe der Strahlen gestattet und dem Schiff eine große Manövrierbarkeit verleiht.

Fig.1

Fig.2

Fig.3

13

13a

12

8

10

11

ω

Fig. 4

Fig. 5

Fig.6

Fig.6a

Fig.6b

22

22

22

V

V = 0

22 s

22 s

22 s

T

T

T

Ts

Ts

Ts

0 040 129